Europäisches Patentamt

European Patent Office

Office européen des brevets

(11) Veröffentlichungsnummer: **0 093 692**
A1

## (12) EUROPÄISCHE PATENTANMELDUNG

(21) Anmeldenummer: **83810171.5**

(22) Anmeldetag: **25.04.83**

(51) Int. Cl.³: **G 02 B 27/00**
**G 02 B 7/00**

(30) Priorität: **30.04.82 CH 2658/82**

(43) Veröffentlichungstag der Anmeldung:
**09.11.83 Patentblatt 83/45**

(84) Benannte Vertragsstaaten:
**CH DE FR GB IT LI**

(71) Anmelder: **GRETAG Aktiengesellschaft**
**Althardstrasse 70**
**CH-8105 Regensdorf(CH)**

(72) Erfinder: **Junghans, Jürgen Rudolf**
**Dorzenmatte 78**
**CH-3313 Büren z. Hof(CH)**

(72) Erfinder: **Huber, Ernst**
**Märzengasse 68c**
**CH-5430 Wettingen(CH)**

(74) Vertreter: **Pirner, Wilhelm et al,**
**Patentabteilung der CIBA-GEIGY AG Postfach**
**CH-4002 Basel(CH)**

(54) Vorrichtung zur Dämpfung eines schmalbandigen Lichtstrahls, insbesondere eines Laserstrahls.

(57) Im Strahlengang sind hintereinander zwei gegenseitig um 90° um die Strahlenrichtung verdrehte Paare von planparallelen, beidseitig mit einer dielektrischen Antireflex-Beschichtung (8) versehenen Glasplatten (3-6) angeordnet. Die Platten sind gegen die Strahlenrichtung (9) winkelverstellbar angeordnet, wobei durch eine kinematische Kopplung der Platten untereinander dafür gesorgt ist, dass die Neigungswinkel aller Platten der Grösse nach stets gleich sind. Innerhalb eines Paares stehen die Platten jedoch jeweils symmetrisch zu einer zur Strahlenrichtung normalen Ebene. Die Dämpfung des Systems hängt vom Neigungswinkel der Platten ab und ist bei senkrechtem Lichteinfall minimal. Das Dämpfungssystem bewirkt keine Strahlversetzung und hat u.a. auch noch den besonderen Vorteil, dass es den Polarisationszustand des Lichtstrahls nicht verändert und damit sowohl für unpolarisiertes als auch polarisiertes Licht geeignet ist.

./...

Fig.1

9-13901/=

Vorrichtung zur Dämpfung eines schmalbandigen Lichtstrahls, insbesondere eines Laserstrahls

Die Erfindung betrifft eine Dämpfungsvorrichtung gemäss dem Oberbegriff von Patentanspruch 1.

Zur Intensitätsvariation (Dämpfung) von Laserstrahlen sind die verschiedensten Methoden und Systeme bekannt, die jedoch alle mit spezifischen Nachteilen behaftet sind.

Eine dieser Methoden arbeitet mit Absorptionsfiltern, insbesondere Graufiltern. Durch die Absorption der Energie im Filtermaterial wird dieses stark erwärmt, was unter Umständen zur Zerstörung führen kann.

Bei einer anderen Methode (siehe z.B. G.T. Sincerbox, J.G. Gordon, "Modulating light by attenuated total reflection", Laser Focus, Nov. 1981, S. 55-58) wird ein totalreflektierendes Prisma verwendet, dessen totalreflektierende Grenzschicht einen Spalt variabler Weite mit einem absorbierenden Medium bildet, wobei die Dämpfung von der Spaltweite abhängt. Der Nachteil dieser Methode liegt in der sehr kritischen und sich mit der Temperatur leicht verändernden Einstellung der Spaltweite.

Gemäss einer weiteren bekannten Methode werden interne Dämpfungsmechanismen innerhalb des Laser-Resonators für die Intensitätsmodulation ausgenützt. Solche internen Dämpfungsmechanismen sind z.B. akustooptische Ablenkung, elektro-optischer Kristall mit Polarisator,

- 2 -

0093692

Variation des Pumplichtlampenstroms etc. Auf diese Weise lässt sich die Laserintensität zwar sehr gut variieren, jedoch besteht dabei der Nachteil, dass sich einige Eigenschaften der emittierten Strahlung wie Pulsbreite, Strahldivergenz etc. ändern können.

Weiters ist es auch schon bekannt, Laserstrahlen mittels dielektrischer Polarisatoren zu dämpfen. Dabei wird jedoch der Polarisationszustand des Laserstrahls geändert, was in vielen Fällen unerwünscht ist.

Schliesslich werden auch schon teildurchlässige Spiegel verwendet, die bei Bedarf in den Strahlengang eingeklappt werden. Der Nachteil dieser Methode ist, dass auf diese Weise nur eine Dämpfung in diskreten Stufen möglich ist.

Durch die vorliegende Erfindung soll nun eine insbesondere für Laserstrahlen geeignete universelle Dämpfungsvorrichtung geschaffen werden, welche den nachstehenden Anforderungen genügt:

- keine wesentliche Aenderung des Polarisationszustands, Eignung sowohl für polarisiertes als auch unpolarisiertes Licht
- kontinuierliche Variation des Dämpfungsgrads
- keine Beeinflussung der Laseremission
- keine Strahlversetzung und Richtungsänderung
- keine Erwärmung und dadurch bedingte Veränderung des Dämpfungsverhaltens.

Die erfindungsgemässe Vorrichtung, die diesen Anforderungen genügt, ist im Patentanspruch 1 beschrieben. Bevorzugte Ausführungsformen ergeben sich aus den abhängigen Ansprüchen.

Im folgenden wird die erfindungsgemässe Vorrichtung anhand der Zeichnung näher erläutert. Es zeigen:

Fig. 1   eine Schrägansicht der wesentlichsten Teile der Vorrichtung
und

Fig. 2-8 Prinzipskizzen zur Erläuterung der Dimensionierungsgrundlagen.

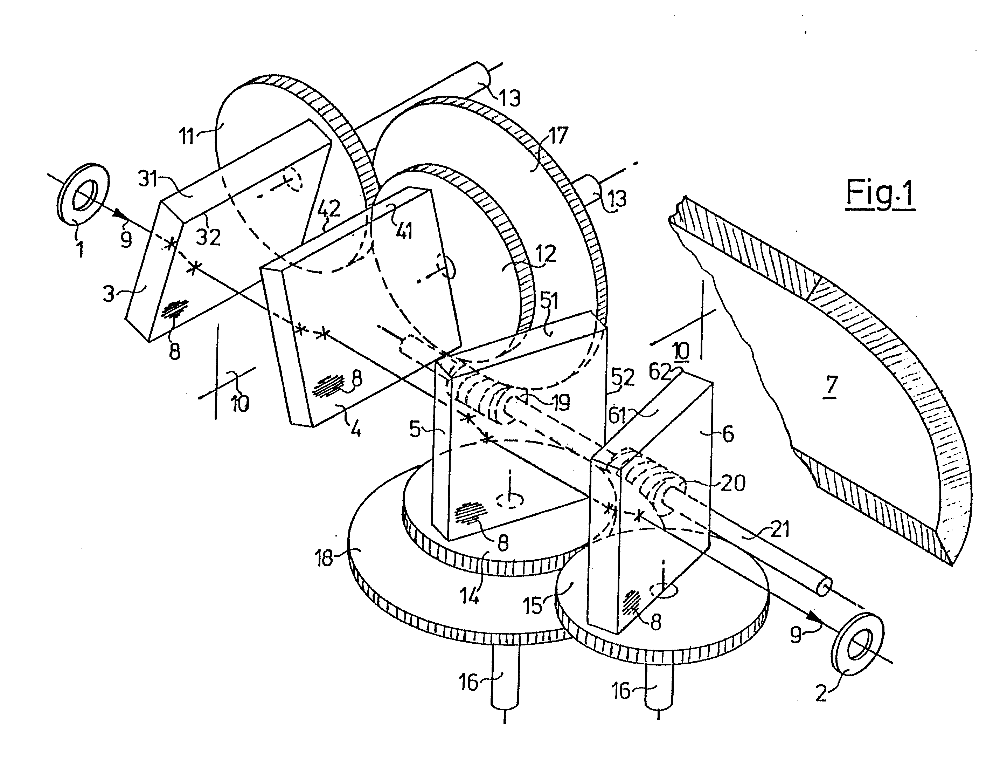

Die dargestellte Vorrichtung umfasst gemäss Fig. 1 eine Eintrittsblende 1, eine Austrittsblende 2, vier planparallele Platten 3-6 und diverse mechanische Teile zur Halterung und Bewegung der Platten. Das
Ganze ist in ein rohrförmiges Gehäuse 7 eingebaut, welches die optische Anordnung seitlich vollkommen umschliesst.

Die vier planparallelen Platten 3-6 bestehen aus Glas oder einem
anderen optisch transparenten Material und weisen an ihren beiden
Oberflächen eine dielektrische Beschichtung 8 auf, die so ausgebildet ist, dass sie für die verwendete Wellenlänge des zu dämpfenden
Laserstrahls 9 bei zur Plattenebene senkrechtem Lichteinfall als
praktisch verlustfreie Antireflexbeschichtung wirkt, d.h., dass bei
senkrechtem Lichteinfall praktisch alles Licht durch die Platte durchgeht und möglichst wenig Licht reflektiert wird. Praktisch brauchbare
Werte sind etwa $<$1,3 % Reflexion pro Grenzfläche, vorzugsweise
$<$0,5 % pro Grenzfläche, d.h. Uebergang Luft-Glas oder umgekehrt.

Die vier Platten 3-6 sind paarweise symmetrisch bezüglich Normalebenen
10 zur Richtung des Laserstrahls 9 angeordnet. Die Platten 3 und 4
des ersten, eintrittseitigen Paares sind auf zwei miteinander kämmenden   Zahnscheiben 11 und 12 befestigt, welche um zwei parallele,
den Laserstrahl 9 senkrecht kreuzende Achsen 13 z.B. in der Gehäusewand drehbar gelagert sind. Analog sitzen die beiden Platten 5 und 6
des zweiten, austrittseitigen Paares auf zwei ebenfalls kämmenden
Zahnscheiben 14 und 15, die ebenfalls um parallele und den Laserstrahl
9 senkrecht kreuzende Achsen 16 drehbar gelagert sind. Die Schwenkachsen 16 des zweiten Plattenpaares 5, 6 sind jedoch um 90° um den
Laserstrahl 9 gegenüber den Schwenkachsen 13 des ersten Paares 3, 4 verdreht, d.h., sie kreuzen diese im rechten Winkel. Der Laserstrahl 9, die Achsen 13 und die Achsen 16 kreuzen sich also paarweise senkrecht.

Je eine Zahnscheibe 12 bzw. 14 der beiden Zahnscheibenpaare 11, 12 und 14, 15 ist mit je einem Zahnrad 17 bzw. 18 drehfest verbunden, welche beiden Zahnräder durch zwei auf einer gemeinsamen Welle 21 sitzende Schneckenräder 19 und 20 synchron angetrieben sind. Auf diese Weise sind alle vier Platten 3-6 kinematisch derart miteinander gekoppelt, dass ihre Winkelstellung zum Laserstrahl 9 für alle Platten synchron veränderbar und unabhängig von der Grösse des Anstellwinkels für alle Platten stets gleich ist.

Die allgemeine Funktionsweise der Vorrichtung ist wie folgt:

Wenn die Platten 3-6 senkrecht zum Laserstrahl 9 stehen, also der im folgenden noch benötigte, gegen die Normalebene 10 zum Strahl 9 gemessene Neigungswinkel $\alpha$ der Platten gleich $0$ ist, wirken die Beschichtungen 8 als Antireflexbeschichtungen und der Laserstrahl geht praktisch ungedämpft (Gesamtdämpfung je nach Beschichtung vorzugsweise unter 4 %) durch die Platten hindurch. Werden die Platten jedoch geneigt ($\alpha \neq 0$), so tritt mit steigendem Neigungswinkel $\alpha$ zunehmend Reflexion auf. Da nur das transmittierte Licht durch die Austrittsblende 2 austritt, bedeutet der reflektierte Anteil Dämpfung. Das reflektierte Licht wird vom Gehäuse 7 absorbiert und erwärmt dieses. Das Gehäuse kann daher im Bedarfsfalle mit aktiven Kühlmitteln versehen sein.

Beim Durchgang durch die jeweils erste Platte eines Paares erfährt der Laserstrahl aufgrund der Dicke der Platte eine Parallelversetzung, welche aber durch die symmetrisch gegengeneigte zweite Platte des Paares wieder kompensiert wird. Nach dem Durchgang durch ein Plattenpaar ändert sich auch der Polarisationszustand des Laserstrahls. Aufgrund des um 90° räumlich verdrehten zweiten Plattenpaares wird jedoch auch diese Aenderung des Polarisationszustandes wieder rückgängig gemacht. Nach dem Durchgang durch beide Plattenpaare hat der Laserstrahl somit lediglich die gewünschte Dämpfung erfahren, ist jedoch weder in seiner Lage noch in seiner Richtung noch in seinem Polarisationszustand irgendwie verändert.

Wie schon weiter vorne erwähnt, soll die beidseitige Beschichtung 8 der Platten 3-6 bei senkrechtem Lichteinfall für die Wellenlänge des jeweiligen Laserstrahls als Antireflexbeschichtung wirken, wobei die Gesamtdämpfung (Verluste) für alle acht Luft-Glas-Uebergänge nicht grösser als 10 %, besser kleiner als 4 % sein sollte. Dies entspricht einem Reflexionsverlust von 1,3 % bzw. 0,5 % pro Oberfläche. Weiter ist es vorteilhaft, wenn der Zusammenhang zwischen Reflexionsverlust und Wellenlänge (im halblogarithmischen Massstab) über einen weiten Bereich möglichst linear und möglichst steil verläuft, letzteres insbesondere im Hinblick auf eine möglichst hohe Dämpfung bei maximalem Neigungswinkel $\alpha$. Die maximale Dämpfung sollte vorzugsweise grösser als etwa $10^3$ sein. Die Herstellung von diesen Anforderungen genügenden Antireflexbeschichtungen ist bekannt und u.a. z.B. in A.L. Bloom "Refining and Optimization in Multilayers" Appl. Opt., Vol 20, No. 1, Jan. 81, S- 66-73 oder in K.G. Guenther "Color variations of AR coatings caused by a leached layer on the substrate "Appl. Opt., Vol. 20, No. 1, Jan. 81, S. 48-53 beschrieben.

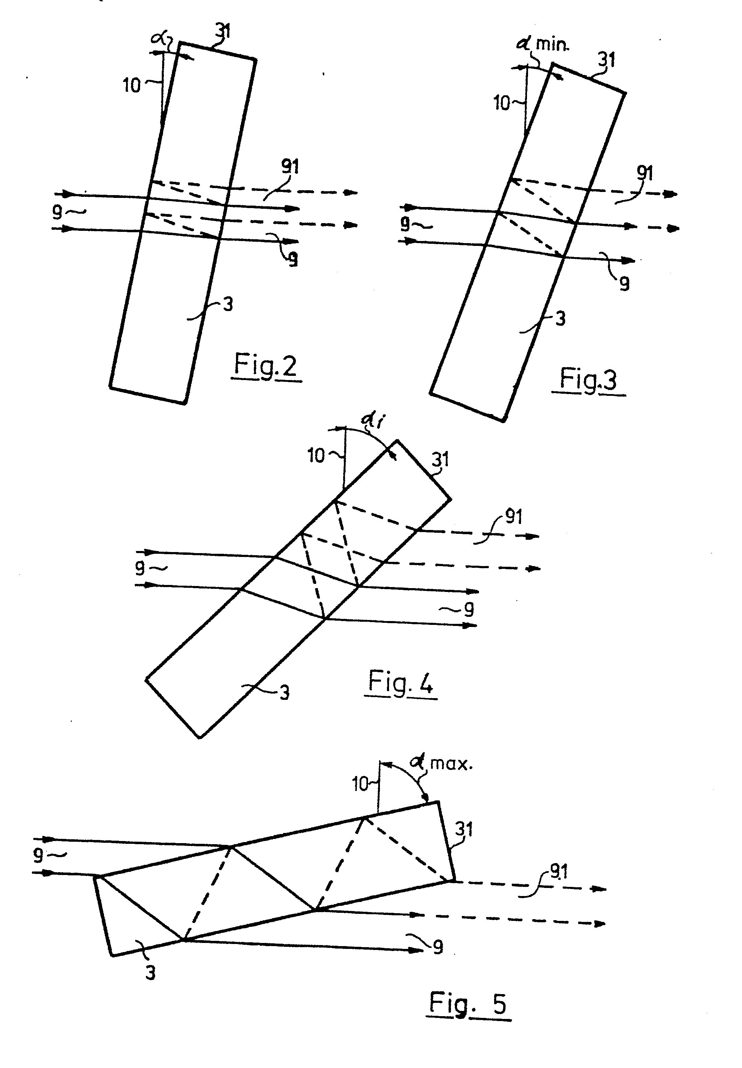

Beim Durchgang des Laserstrahls 9 durch die Platten 3-6 entstehen aufgrund von Mehrfachreflexion Nebenstrahlen. Wie in den Fig. 2-5 am Beispiel der ersten Platte 3 dargestellt, sind diese Nebenstrahlen 91 zunächst mit steigendem Neigungswinkel $\alpha$ der Platten zunehmend gegenüber dem Hauptstrahl 9 versetzt, nähern sich aber dann mit weiter steigendem Neigungswinkel $\alpha$ wieder dem Hauptstrahl 9. Bei ungünstigen Winkelstellungen können sich diese mehrfach reflektierten Nebenstrahlen überlagern und dadurch die ursprüngliche räumliche Intensitätsverteilung des Strahls - im allgemeinen geringfügig - verändern.

Ueber einen Winkelbereich zwischen einem minimalen und einem maximalen Neigungswinkel $\alpha_{min}$ bzw. $\alpha_{max}$ überlappen sich Haupt- und Nebenstrahl nicht. Wenn also der Einstellbereich der Neigungswinkel auf diesen Winkelbereich $\alpha_{min} - \alpha_{max}$ beschränkt wird, ist es möglich, die Nebenstrahlen 91 durch geeignet angeordnete Blenden nach jeder Platte auszublenden und dadurch unerwünschte Ueberlagerungseffekte zu vermeiden. Da sich die Strahllage mit der Winkelstellung ändert, müssen die Blenden ebenfalls verstellbar sein. Dies kann z.B. durch eine kinematische Kopplung mit den Platten automatisch geschehen.

Die beiden Grenzwinkel $\alpha_{min}$ und $\alpha_{max}$ errechnen sich aus der Beziehung

$$\frac{d}{\cos \alpha} = \frac{2 \cdot h \cdot \sin \alpha}{\sqrt{n^2 - \sin^2 \alpha}}$$

worin d den Durchmesser des Laserstrahls 9, h die Dicke der Platten und n den Brechungsindex derselben bedeuten.

In der Praxis ist im übrigen die Dämpfung beim kleineren Grenzwinkel $\alpha_{min}$ noch so klein, dass die Strahlaufspaltung in Haupt- und Nebenstrahlen vernachlässigt werden kann. Somit besteht bezüglich des Einstellbereichs in der Praxis lediglich eine Einschränkung nach grösseren Winkeln ($\alpha_{max}$).

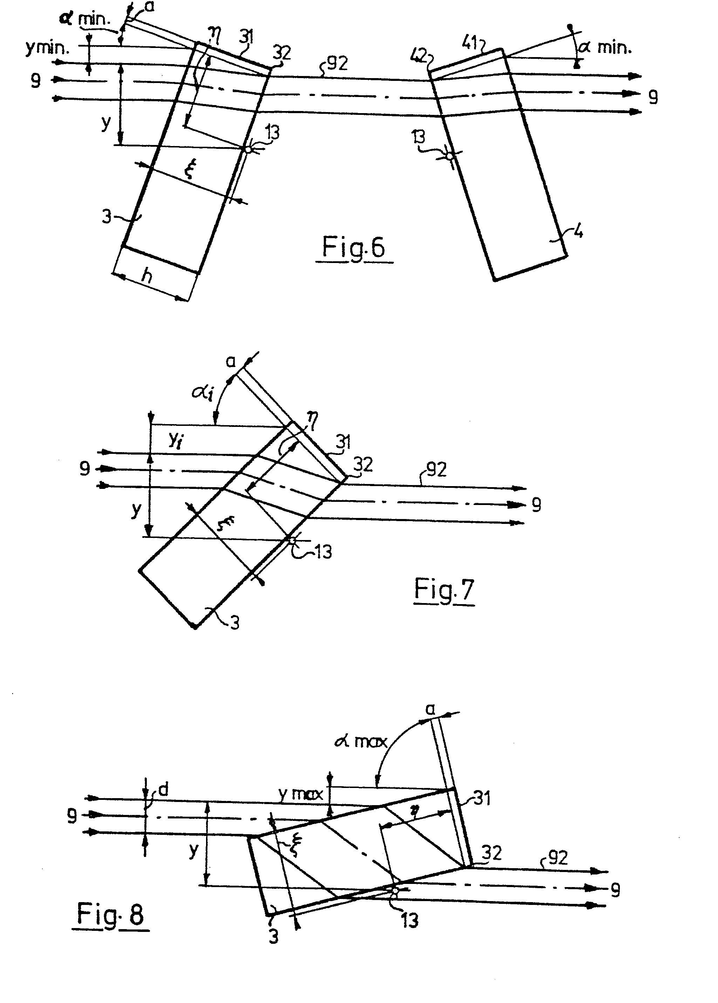

Gemäss einer bevorzugten Ausführungsvariante der Erfindung werden die mehrfach reflektierten Strahlen 91 nicht mittels Blenden ausgeblendet, sondern die Platten und ihre Lage bezüglich der Schwenkachsen 13 bzw. 16 werden so bemessen bzw. bestimmt, dass die Nebenstrahlen im wesentlichen durch die opaken Stirnflächen 31-61 austreten, sodass sie
nicht mehr zur nächstfolgenden Platte gelangen können und vom Gehäuse
7 absorbiert werden. Um diese Ausblendung der Nebenstrahlen zu erreichen, ist es erforderlich, dass, wie aus den Fig. 6-8 ersichtlich,
die beiden Platten 3 und 4 bezüglich des Laserstrahls 9 in jeder
Winkellage zwischen den beiden Grenzwinkeln $\alpha_{min}$ und $\alpha_{max}$ so angeordnet sind, dass der oberste Randstrahl 92 des versetzten Hauptstrahls
9 zwischen den beiden Platten 3 und 4 möglichst dicht an den den
Uebergang zu den opaken Stirnflächen 31 und 41 bildenden Kanten 32
bzw. 42 zu liegen kommt. Da die Antireflexbeschichtung 8 in der Praxis
in Randnähe vielfach beschädigt ist oder aus anderen Gründen nicht
benützt werden kann, ist ein Sicherheitsabstand a vorgesehen, bis
zu welchem sich der Randstrahl 92 den Plattenkanten 32 und 42 nähern
kann. Für die Platten 5 und 6 gilt natürlich Analoges, nur eben um
90° um die Strahlachse verdreht.

Aus den vorstehenden Ausblendbedingungen ergeben sich für die beiden
Grenzwinkel $\alpha_{min}$ und $\alpha_{max}$ sowie für einen dritten, frei wählbaren
Winkel $\alpha_i$ zwischen diesen beiden aus dem Brechungsgesetz  drei Grössen
$y_{min}$, $y_{max}$ und $y_i$, welche die Lage des Laserstrahls 9 bezüglich der
Plattenkanten 32 bzw. 42 definieren. Die Lage der Schwenkachsen 13
relativ zu den Platten 3 und 4 ergibt sich dann aus den drei Gleichungen

$$y + y_j = \xi \cdot \sin \alpha_j + \eta \cdot \cos \alpha_j \qquad j = min, max, i$$

worin $y$, $\xi$ und $\eta$ die Unbekannten sind und die aus den Fig. 6-8 ersichtliche Bedeutung besitzen. Analoges gilt natürlich wieder auch für
die beiden Platten 5 und 6.

**0093692**

Patentansprüche

1. Vorrichtung zur Dämpfung eines schmalbandigen Lichtstrahls, insbesondere eines Laserstrahls, gekennzeichnet durch zwei Paare ebener, jeweils beidseits mit einer dielektrischen Beschichtung (8) versehener transparenter Platten (3-6), wobei die beiden Platten (3,4; 5,6) jedes Paares jeweils um zu einer Normalebene (10) auf die Strahlrichtung (9) parallele Schwenkachsen (13,16) symmetrisch zu dieser Normalebene winkelverstellbar angeordnet sind und die Schwenkachsen (13) des einen Paares (3,4) diejenigen (16) des anderen Paares (5,6) im rechten Winkel kreuzen, wobei die Platten ferner untereinander kinematisch derart gekoppelt sind, dass ihre gegen die Normalebene (10) gemessenen Neigungswinkel $\alpha$ im wesentlichen stets gleich sind, und wobei weiters die dielektrische Beschichtung (8) der Glasplatten (3-6) so ausgebildet ist, dass sie bei einem Neigungswinkel ($\alpha$) der Platten von 0° im wesentlichen als Antireflexbeschichtung wirkt.

2. Vorrichtung nach Anspruch 1, dadurch gekennzeichnet, dass die dielektrische Beschichtung (8) so ausgebildet ist, dass sich bei maximaler Neigung ($\alpha_{max}$) der Platten (3-6) ein Gesamtdämpfungsfaktor von wenigstens $10^3$ ergibt.

3. Vorrichtung nach Anspruch 1 oder 2, dadurch gekennzeichnet, dass die Platten (3-6) in einem kühlbaren, reflektierte Strahlung absorbierenden Gehäuse (7) angeordnet sind.

4. Vorrichtung nach einem der vorangehenden Ansprüche, dadurch gekennzeichnet, dass die Platten (3,4,5,6) jedes Paares je auf zwei gegensinnig im wesentlichen spielfrei drehgekoppelten Drehtellern (11, 12, 14, 15) angeordnet sind.

5. Vorrichtung nach einem der vorangehenden Ansprüche, dadurch gekennzeichnet, dass wenigstens im Strahlengang nach den Platten (3-6)
Blenden zur Ausblendung von z.B. durch Mehrfachreflexionen bedingten
unerwünschten Strahlen vorgesehen sind.

6. Vorrichtung nach Anspruch 5, dadurch gekennzeichnet, dass die
Blenden verstellbar und kinematisch mit den Platten (3-6) gekoppelt
sind.

7. Vorrichtung nach einem der Ansprüche 1-4, dadurch gekennzeichnet,
dass die Platten (3-6) und ihre Schwenkachsen (13,16) in bezug
auf den Lichtstrahl (9) derart angeordnet sind, dass durch Mehrfachreflexion erzeugte Nebenstrahlen zumindest für einen Teil des von
den Platten überstreichbaren Neigungswinkelbereichs im wesentlichen
über die Stirnflächen (31-61) der Platten zumindest teilweise ausgeblendet werden.

8. Vorrichtung nach einem der vorangehenden Ansprüche, dadurch gekennzeichnet, dass die dielektrische Beschichtung (8) der Platten (3-6)
so ausgebildet ist, dass die Gesamtdämpfung beim Neigungswinkel 0°
der Platten nicht grösser als 10 %, vorzugsweise nicht grösser als 4 %
ist.

0093692

Fig.1

Fig.2

Fig.3

Fig. 4

Fig. 5

Fig.6

Fig.7

Fig.8

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | LASER FOCUS, Band 17, Nr. 11, November 1981, Seiten 55-58, Newton, Massachusetts, USA G.T. SINCERBOX et al.: "Modulating light by attenuated total reflection. A prism and a piece of metal separated by a variable-width air gap make up a new type of modulator that's fast, requires no high voltages and handles large-aperture beams" * Insgesamt * | 1 | G 02 B 27/00 G 02 B 7/00 |
| A | US-A-4 072 858 (S.M. STONE) * Figuren 1,2,3; Spalte 1, Zeilen 5-11, 30-58; Spalte 3, Zeile 3 - Spalte 4, Zeile 8; Ansprüche * | 1 | |
| A | INSTRUMENTS AND EXPERIMENTAL TECHNIQUES, Band 17, Nr. 3II, 1974, Seiten 822-823, New York, USA I.N. GOVOR et al.: "A stabilizer for stabilizing the radiation power of a laser oscillator" * Insgesamt * | 1 | RECHERCHIERTE SACHGEBIETE (Int. Cl. 3) G 02 F 1/00 G 02 B 7/00 H 01 S 3/00 G 02 F 3/00 |
| A | GB-A-1 342 436 (EURATOM) * Seite 1, Zeilen 9-12, 24-33; Seite 1, Zeile 42 - Seite 2, Zeile 71; Anspruch 1 * | 1,3 | |

---  -/-

Der vorliegende Recherchenbericht wurde für alle Patentansprüche erstellt.

| Recherchenort DEN HAAG | Abschlußdatum der Recherche 24-06-1983 | Prüfer BROCK T.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument

EPA Form 1503. 03.82

Europäisches Patentamt

**EUROPÄISCHER RECHERCHENBERICHT**

Nummer der Anmeldung

EP 83 81 0171

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | OPTICS COMMUNICATIONS, Band 38, Nr. 5,6, 1. September 1981, Seiten 381-386, Amsterdam, NL. W.B. VELDKAMP: "Laser beam profile shaping with binary diffraction gratings" * Seite 383, Zeilen 14-17; Figur 1 * | 1 | |

-----

RECHERCHIERTE SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| DEN HAAG | 24-06-1983 | BROCK T.J. |